# EUROPÄISCHE PATENTSCHRIFT

(11) **EP 3 651 288 B1**
(45) Veröffentlichungstag und Bekanntmachung des Hinweises auf die Patenterteilung: **05.01.2022**
(21) Anmeldenummer: 18204666.4
(22) Anmeldetag: 06.11.2018
(51) Int. Cl.: H01R 43/00, H02G 1/14, H01R 43/28

(54) **TÜLLENSTATION**
GROMMET STATION
STATION DE DISTRIBUTION

(43) Veröffentlichungstag der Anmeldung: 13.05.2020
(73) Patentinhaber: KOMAX HOLDING AG, 6036 Dierikon (CH)
(72) Erfinder: WEBER, Bruno, 6275 Ballwil (CH)
(74) Vertreter: Inventio AG

(56) Entgegenhaltungen:
- EP-A1- 0 626 738
- EP-A2- 0 410 416
- US-A1- 2001 039 707
- US-A1- 2002 133 945

## Beschreibung

Die Erfindung betrifft eine Tüllenstation zur Bestückung von elektrischen Kabeln gemäss dem Oberbegriff von Anspruch 1. Mit derartigen Tüllenstationen können Tüllen, die beispielsweise für feuchtigkeitsdichte Durchführungen von elektrischen Kabeln durch Steckergehäuse oder Gehäusewände von Elektroapparaten benötigt werden, rationell auf Kabel gebracht werden.

Bei der Konfektionierung von Kabeln können Kabel abgelängt und abisoliert, mit Tüllen bestückt, gecrimpt und gegebenenfalls mit Gehäusen versehen werden. Dazu wird ein abisoliertes Kabel mit einer Tülle bestückt, danach wird in der Regel ein Metallkontakt angecrimpt. Dieser Crimpkontakt ist dabei so ausgebildet, dass er die Tülle auf dem Kabel festhält. Zur Konfektionierung von Kabeln werden häufig Automaten oder Halbautomaten eingesetzt, wobei bei einem Halbautomaten die Kabelzuführung zur jeweiligen Bearbeitungsstation manuell erfolgt.

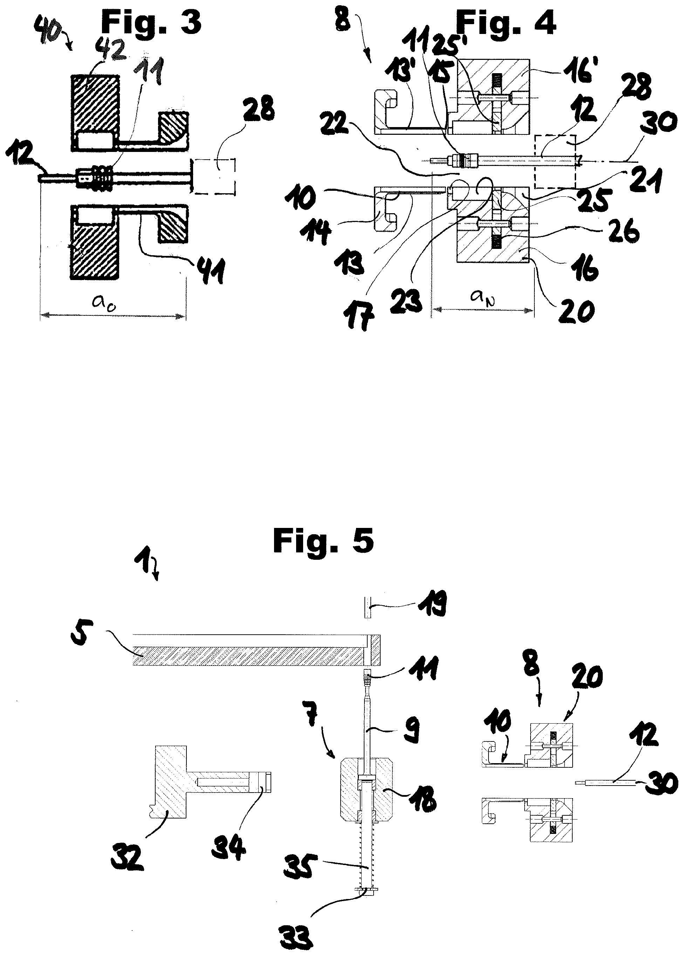

Eine gattungsmässig vergleichbare Tüllenstation ist in der EP 0 626 738 A1 gezeigt. Die Tüllenstation umfasst einen Tüllenspeicher mit einer mit Tüllen befüllten Trommel und ein Tüllenbestückungsmodul zum Bestücken eines abisolierten Kabelendes eines Kabels mit einer Tülle. Über eine Förderschiene werden die Tüllen lagerichtig zu einer Vereinzelungseinheit gefördert, von welcher Tüllen jeweils einzeln auf einen Dorn einer Transfereinheit aufgeschoben werden. Die Transfereinheit ist als Drehvorrichtung ausgestaltet und umfasst insgesamt vier Dorne. Neben der erwähnten Transfereinheit mit den vier Dornen umfasst das Tüllenbestückungsmodul weiter einen Bestückungskopf mit einer Spreizhülse. Dieser Bestückungskopf ist in Fig. 3 dargestellt und dort mit 40 bezeichnet. Am Ende der Vereinzelungseinheit ist eine Ausstossvorrichtung mit einem auf und ab bewegbaren Stössel angeordnet, wobei mit dem Stössel jeweils die erste Tülle in der Förderschiene der Transfereinrichtung zugeführt wird. Die Transfereinrichtung ist schrittweise um einen 90°-Winkel drehbar, wobei in einer ersten Stellung jeweils die Tülle auf den Dorn mittels des erwähnten Stössels geschoben wird. Nach einer Drehung um 90° wird in einer zweiten Stellung der Transfereinheit die Tülle zum Zwecke des Aufweitens auf einen Bereich des Dorns geschoben, der einen grösseren Durchmesser aufweist. Die eigentliche Bestückung des Kabelendes mit der Tülle erfolgt in einer dritten Stellung. In dieser dritten Stellung der Transfereinrichtung wird die Tülle vom Dorn unter Verwendung des in Fig. 3 gezeigten Bestückungskopfs 40 mit Tüllenaufnahmeteil 42 und Spreizhülse 41 abgezogen und die Tülle 11 in aufgeweitetem Zustand auf das Kabel 12 platziert und schliesslich darauf abgeschoben. Sobald der Dorn in die dritte Stellung geschwenkt wurde, umschliesst der Bestückungskopf 40 mit der zweiteilig ausgeführten Spreizhülse 41 und einer ebenfalls zweiteilig ausgebildeten Tüllenaufnahmeteil 42 die Tülle. Durch das Tüllenaufnahmeteil 42 wird die Tülle 11 auf die Spreizhülse 41 aufgeschoben. Die Spreizhülse 41, die gegenüber dem Tüllenaufnahmeteil 42 vorgelagert ist, weist am vorderen, dem Kabel 12 zugewandten Ende, einen aufgeweiteten Bereich mit einer trichterförmigen Einführöffnung zum Einführen des Kabels in den geschlossenen Bestückungskopf 40 auf. In der Praxis hat sich gezeigt, dass diese Tüllenbestückungsstation einen relativ grossen Kabelüberstand erfordert. Dieser Kabelüberstand ist der freiliegende Teil des Kabelendes und in Fig. 3 mit aₒ bezeichnet. Beispielsweise muss bei vollautomatisch ausgeführten Tüllenstationen das Kabel um diesen Kabelüberstand auf einem Kabelgreifer, der das Kabel zum Bestückungskopf bringt, herausstehen und kann entsprechend durchhängen. Beim Zuführen des Kabels mit dem Greifer können unerwünschte Schwingungen und Bewegungen entstehen, die Handhabung von insbesondere dünnen Kabeln kann schwierig sein. Weiterhin kann die Verarbeitung von Mantelleitungen, bei denen mehrere Einzelleitungen zu einem Kabel zusammengefasst sind, schwierig sein.

Aus US 2002/133945 A1 ist eine Tüllenstation mit einem Tüllenbestückungsmodul bekannt geworden, das eine Bestückungseinheit mit einer zweiteilig ausgebildeten Spreizhülse zum Platzieren der Tülle auf ein Kabelende und einer ebenfalls zweiteilig ausgebildeten Tüllenaufnahmeeinrichtung zum Aufnehmen und Halten der Tülle während des Bestückungsvorgangs auf. Das Tüllenbestückungsmodul umfasst sodann einen Dorn, auf den die Tülle zunächst aufschiebbar ist und von dem die Tülle der Bestückungseinheit übergeben wird. Die Spreizhülse und der Dorn sind dabei in der Übergabestellung gleichgerichtet orientiert.

Es ist deshalb eine Aufgabe der vorliegenden Erfindung, die Nachteile des Bekannten zu vermeiden und insbesondere eine Tüllenstation zu schaffen, mit der Kabel zuverlässig und effizient mit Tüllen bestückt werden können.

Diese Aufgabe wird erfindungsgemäss mit der Tüllenstation mit den Merkmalen von Anspruch 1 gelöst. Die Tüllenstation zur Tüllenbestückung von elektrischen Kabeln weist ein Tüllenbestückungsmodul zum Bestücken eines vorzugsweise abisolierten Kabelendes eines Kabels mit einer Tülle auf. Neben dem Tüllenbestückungsmodul kann die Tüllenstation einen Tüllenspeicher mit einer Trommel zur losen Bevorratung von Tüllen und eine Förderschiene zum lagerichtigen Heranführen der Tüllen zum Tüllenbestückungsmodul aufweisen. Das Tüllenbestückungsmodul umfasst eine Bestückungseinheit mit einer Spreizhülse zum Halten der Tülle in aufgeweiteten Zustand und zum Platzieren der Tülle auf das Kabelende und eine Transfereinheit mit wenigstens einem Dorn. Die Transfereinheit ist derart ausgestaltet, dass in einer Übernahmestellung eine Tülle auf den Dorn aufschiebbar ist und dass in einer Übergabestellung der Dorn derart mit der Bestückungseinheit in Wirkverbindung steht, dass die Tülle vom Dorn der Bestückungseinheit übergeben werden kann, wobei in der Übergabestellung die Spreizhülse der Bestückungseinheit temporär den Dorn umgibt. Mittels einer Ausstossvorrichtung kann die Tülle von der Förderschiene auf den Dorn in der Übernahmestellung aufgeschoben werden. Die Ausstossvorrichtung kann einen auf und ab bewegbaren Stössel enthalten, mit dem jeweils die erste Tülle in der Förderschiene der Transfereinrichtung zuführbar ist. Der Dorn und die den Dorn umgebende Spreizhülse sind in der Übergabestellung gleichgerichtet orientiert, wodurch die Tülle von der Spreizhülse von hinten her erfassbar ist.

Mit der gleichgerichteten Orientierung ist gemeint, dass die beiden Spitzen der jeweiligen Komponenten, also die Spitze des Dorns einerseits und die Spitze der Spreizhülse andererseits, in dieselbe Richtung zeigen. Wenn die Spreizhülse den Dorn in der Übergabestellung umgibt, sind die angesprochenen Spitzen dem Kabelende des Kabels zugewandt. Dadurch, dass die Tülle von der Spreizhülse von hinten her erfassbar ist, lässt sich das Kabel zuverlässig und effizient mit einer Tülle bestücken. Die spezielle Anordnung ermöglicht es weiterhin, das Tüllenbestückungsmodul kompakt auszuführen. Ein besonderer Vorteil der Anordnung besteht darin, dass der notwendige Kabelüberstand deutlich verkleinert werden kann. Das nun weniger durchhängende oder kaum noch durchhängende Kabelende macht die Kabelhandhabung bedeutend einfacher. Das Kabelnde kann von einem Kabelgreifer im Hinblick auf die Bearbeitung durch die Bestückungseinheit präzise gehalten und bereitgestellt werden und das Kabelnde kann mittels des Kabelgreifers beispielsweise eines Vollautomaten oder gegebenenfalls auch manuell zur Bestückungseinheit herangefahren oder -gebracht werden.

Die Bestückungseinheit weist eine Längsmittelachse auf, entlang der sich die Spreizhülse erstreckt. Das Kabel weist vorzugsweise wenigstens im Bereich des Kabelendes eine Kabelachse auf, die koaxial zur Längsmittelachse ist. Ebenso verläuft der Dorn in der Übergabestellung koaxial zur Längsmittelachse. Die nachfolgend in Zusammenhang mit der Bestückungseinheit verwendeten Richtungsangaben beziehen sich, sofern nicht anders vermerkt, auf diese Längsmittelachse; wenn also diesbezüglich nachfolgend Begriffe wie «radial» oder «axial» verwendet werden, sind diese auf die Längsmittelachse bezogen.

Die Spreizhülse ist zweiteilig ausgebildet. Die zweiteilige Spreizhülse weist dabei zwei radial gegenläufig bewegbare Schalenteile auf. Die mittels eines oder mehrerer Aktuatoren zwischen einer Schliessstellung und einer Offenstellung bewegbaren Schalenteile, wobei die Schalenteile in der Schliessstellung zum Bilden der Hülsenform zusammengesetzt sind und in der Offenstellung in vorzugsweise paralleler Lage voneinander entfernt sind, ermöglichen einen effizienten Betrieb der Tüllenstation. Als Aktuator für eine simultane Bewegung der Schalenteile kann zum Beispiel ein gemeinsamer Elektromotor eingesetzt werden. Eine solche Spreizhülse kann durch eine Schliessbewegung einfach auf den Dorn, wenn die Transfereinheit in der Übergabestellung ist, gebracht werden und diesen umgeben. Nach Öffnen der Spreizhülse kann die Wirkverbindung zwischen Bestückungseinheit und Transfereinheit wenigstens temporär wieder aufgehoben werden, so dass die Transfereinheit zurück in die Übernahmestellung bewegt werden kann.

Die Bestückungseinheit weist weiter eine Tüllenaufnahmeeinrichtung zum Aufnehmen und Halten der Tülle während des Bestückungsvorgangs auf. Besonders bevorzugt sind die Spreizhülse und die Tüllenaufnahmeeinrichtung mechanisch miteinander gekoppelt, wobei die Spreizhülse in die Tüllenaufnahmeeinrichtung einführbar ist. Für die mechanische Kopplung können die Spreizhülse und die Tüllenaufnahmeeinrichtung relativ zueinander in axialer Richtung verschiebbar sein. Damit wird erreicht, dass beim Einfahren der Spreizhülse in die Tüllenaufnahmeeinrichtung die Tülle auf die Spreizhülse geschoben wird.

Damit die Tülle von der Spreizhülse einfach von hinten her erfasst werden kann, ist eine Baueinheit aus Spreizhülse und Tüllenaufnahmeeinrichtung vorteilhaft, bei der die Spreizhülse gegenüber der Tüllenaufnahmeeinrichtung nachgelagert ist. Die Bestückungseinheit weist eine Vorderseite auf, die dem zu verarbeitenden Kabel benachbart ist und dem Kabel zugewandt ist. Das Kabel befindet sich folglich vor der Bestückungseinheit. Nachgelagert bedeutet hier, dass die Spreizhülse hinter der Tüllenaufnahmeeinrichtung bzw. rückseitig (d.h. Gegenseite zur Vorderseite) zur Tüllenaufnahmeeinrichtung angeordnet ist.

Weiterhin kann es vorteilhaft sein, wenn die Tüllenaufnahmeeinrichtung einen trichterförmigen Einführabschnitt aufweist, über den das Kabelende in die Tüllenaufnahmeeinrichtung einführbar ist.

Die Tüllenaufnahmeeinrichtung ist - wie die Spreizhülse - zweiteilig ausgebildet sein. Die zweiteilige Tüllenaufnahmeeinrichtung weist dabei zwei Backen auf, die jeweils zusammen mit den jeweiligen Schalenteilen der Spreizhülse paarweise zwischen einer Schliessstellung und einer Offenstellung bewegbar sind. Der vorgängig erwähnte trichterförmige Einführabschnitt wird durch die Backen gebildet, wenn die Backen sich in der Schliessstellung befinden. Insbesondere dank der Zuordnung des trichterförmigen Einführabschnitts zur Tüllenaufnahmeeinrichtung kann eine kompakte Bestückungseinheit geschaffen werden, die es ermöglicht, mit einem kleinen Kabelüberstand auszukommen.

Die Tüllenaufnahmeeinrichtung kann Abstreifmittel aufweisen, mit welchen die Tülle zum Beendigen des Tüllenbestückungsvorgangs von der Spreizhülse abstreifbar ist.

Wenn die Tüllenaufnahmeeinrichtung einen Aufnahmekanal zur Aufnahme des Dorns mit der Tülle und/oder des Kabelendes aufweist, kann es zur Integration der Abstreifmittel in die Aufnahmeeinrichtung vorteilhaft sein, wenn bevorzugt am rückseitigen Ende eines Tüllenaufnahmeabschnitts des Aufnahmekanals ein Kragen aus Abstreifmittel angeordnet ist, der zum Abstreifen der Tülle einen Anschlag für die Tülle beim Herausfahren der Spreizhülse aus der Tüllenaufnahmeeinrichtung bildet. Der Tüllenaufnahmeabschnitt ist derjenige Abschnitt des Aufnahmekanals, welcher zur Aufnahme der Tülle vorgesehen ist.

Weiter sind Aufschiebemittel vorgesehen, mit denen die bereits auf den Dorn aufgeschobene Tülle auf einen Abschnitt des Dorns mit einem grösseren Durchmesser zum Aufweiten der Tülle aufschiebbar ist. Solche Aufschiebemittel könnten, ähnlich wie in der eingangs erwähnten EP 0 626 738 A1, durch eine separate Aufschiebeeinrichtung gebildet werden. Im Hinblick auf eine kompakte Bauform und eine effiziente Wirkungsweise der Tüllenstation ist es jedoch vorteilhaft, wenn die Aufschiebemittel in der Tüllenaufnahmeeinrichtung integriert sind. Die Aufschiebemittel können auch dazu dienen, beim Einfahren der Spreizhülse in die Tüllenaufnahmeeinrichtung die Tülle vom Dorn auf die Spreizhülse zu schieben.

Die vorerwähnten Aufschiebemittel enthalten Aufschiebeelemente, die in den Backen in Querrichtung, also quer und vorzugsweise senkrecht zu einer Längsmittelachse der Bestückungseinheit, die der Kabelachse entspricht, begrenzt verschiebbar und federnd gelagert sind. Die Aufschiebeelemente können dabei vorzugsweise plattenartig ausgebildet sein.

Weiter kann es vorteilhaft sein, wenn die Transfereinheit einen Dornträger aufweist, in dem der wenigstens eine Dorn in axialer Richtung zwischen einer Ruhestellung und einer ausgefahrenen Stellung verschiebbar gelagert ist und der Dorn in der Übergabestellung mittels eines Aktuators von der Ruhestellung in die ausgefahrene Stellung verfahrbar ist.

Der wenigstens eine Dorn kann mittels eines Federelements zum Erzeugen einer Vorspannkraft in der Ruhestellung gehalten sein. Dank des Federelements beispielsweise in Form einer Schraubendruckfeder ist der Dorn nach Deaktivierung des Aktuators von der ausgefahrenen Stellung in die Ruhestellung automatisch rückführbar.

Das Tüllenbestückungsmodul kann eine mittels des Aktuators betreibbare Verfahrvorrichtung aufweisen, mit deren Hilfe der wenigstens eine Dorn in die ausgefahrene Stellung bewegbar ist.

Besonders vorteilhaft ist es, wenn der Transfereinheit genau ein Dorn zugeordnet ist. Im Dornträger kann somit ein Dorn in axialer Richtung verschiebbar gelagert sein. Für diesen Fall kann es vorteilhaft sein, wenn der Dorn durch den Dornträger geführt ist und diesen beidseitig überragt, wobei ein den Dornträger vorderseitig überragender Bereich des Dorns zum Aufschieben der Tülle dient und ein in Bezug auf den Dornträger rückseitiger Bereich des Dorns einen Bolzen bildet, der von einem linear verfahrbaren Schieber beaufschlagbar ist. Am Ende des Bolzens kann dazu ein Andockelement vorgesehen sein, das in der Übergabestellung in eine komplementäre Aufnahme des Schiebers eingreift und so die Verschiebebewegung in die ausgefahrene Stellung des Dorns ermöglicht. Anstelle von Schiebern sind auch andere Verfahrvorrichtungen denkbar. Beispielsweise könnte der Dorn über ein motorisch betriebenenes Zahnrad und Zahnstangen-Getriebe verfahren werden.

Die Tüllenstation lässt sich effizient betreiben, wenn die Transfereinheit als Schwenkeinheit ausgestaltet ist. Dabei hat die Schwenkeinheit bevorzugt ein Schwenkbereich zwischen Übernahmestellung und Übergabestellung von 90°. Die Transfereinheit ist besonders bevorzugt derart ausgeführt, dass der Dorn zwischen Übernahmestellung und Übergabestellung jeweils durch eine 90°-Drehung hin und her bewegbar ist.

In der Übernahmestellung kann der Dorn in vertikale Richtung verlaufen und es kann von oben her einer Tülle beispielsweise mittels der schon erwähnten Ausstossvorrichtung auf den Dorn geschoben werden. In der Übergabestellung kann der Dorn in horizontaler Richtung verlaufen.

Weitere Einzelmerkmale und Vorteile der Erfindung ergeben sich aus der nachfolgenden Beschreibung von Ausführungsbeispielen und aus den Zeichnungen. Es zeigen:
- Fig. 1: eine perspektivische Darstellung einer Gesamtansicht einer erfindungsgemässen Tüllenstation,
- Fig. 2: ein Tüllenbestückungsmodul der Tüllenstation (Detailansicht aus Fig. 1),
- Fig. 3: einen Längsschnitt durch eine Bestückungseinheit eines Tüllenbestückungsmoduls gemäss dem Stand der Technik,
- Fig. 4: einen Längsschnitt durch eine Bestückungseinheit des Tüllenbestückungsmoduls gemäss Fig. 2,
- Fig. 5: einen Schnitt durch ein Tüllenbestückungsmodul zu Beginn eines Bestückungsvorgangs,
- Fig. 6: das Tüllenbestückungsmodul aus Fig. 5, jedoch nachdem der Dorn einer Transfereinheit in eine Übergabestellung geschwenkt wurde,
- Fig. 7: das Tüllenbestückungsmodul mit der offenen, zur Transfereinheit hin gefahrenen Bestückungseinheit,
- Fig. 8: das Tüllenbestückungmodul mit der nun geschlossenen Bestückungseinheit,

- Fig. 9: das Tüllenbestückungsmodul mit der geschlossenen Bestückungseinheit nach Ausfahren des Dorns,
- Fig. 10: das Tüllenbestückungsmodul mit der geschlossenen Bestückungseinheit nach Einfahren einer Spreizhülse in eine Tüllenaufnahmeeinrichtung der Bestückungseinheit,
- Fig. 11: das Tüllenbestückungsmodul nach einem weiteren Arbeitsschritt, bei dem die Bestückungseinheit von der Transfereinheit weggefahren wurde und nach Einführen des Kabels in die Bestückungseinheit,
- Fig. 12: das Tüllenbestückungsmodul mit der Bestückungseinheit nach Herausfahren der Spreizhülse aus der Tüllenaufnahmeeinrichtung,
- Fig. 13: das Tüllenbestückungsmodul nach Beendigung des Bestückungsvorgangs,
- Fig. 14: einen Querschnitt durch die Tüllenaufnahmeeinrichtung der Bestückungseinheit in einer Teilansicht.

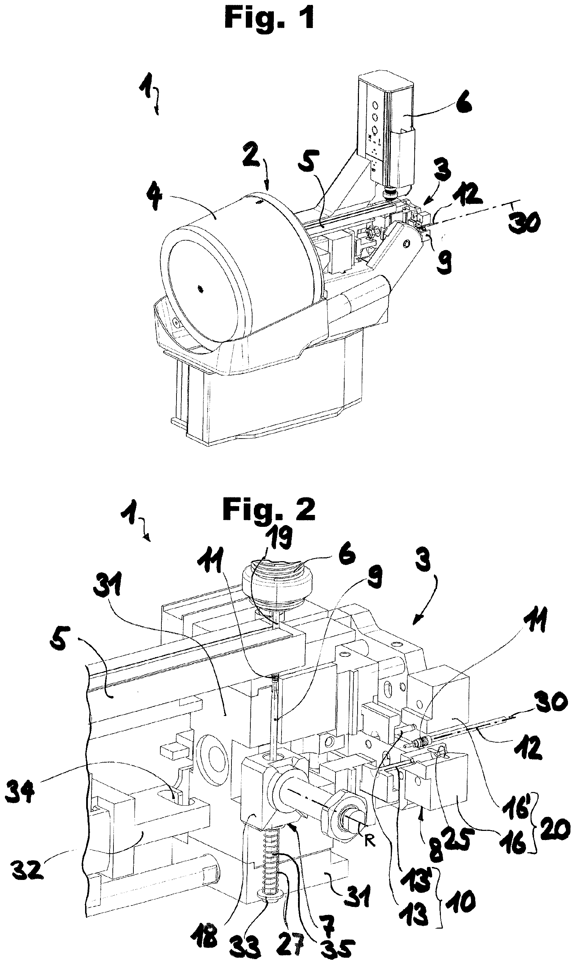

Fig. 1 zeigt eine insgesamt mit 1 bezeichnete Tüllenstation zur Tüllenbestückung von elektrischen Kabeln 12. Tüllen sind röhrenförmige oder schlauchartige Dichtelemente beispielsweise aus Silikon, einem Gummimaterial oder aus einem anderen weichelastisch verformbaren Kunststoff, die in der Regel für feuchtigkeitsdichte Durchführungen von elektrischen Kabeln durch Steckergehäuse oder Gehäusewände von Elektroapparaten benötigt werden.

Die Tüllenstation 1 enthält einen Tüllenspeicher 2 und ein Tüllenbestückungsmodul 3 zum Bestücken eines abisolierten Kabelendes eines Kabels 12 mit einer Tülle auf. Das Tüllenbestückungsmodul 3 umfasst eine sich entlang einer Längsmittelachse 30 verlaufenden Bestückungseinheit 8, mit der eine Tülle auf das Kabel 12, das ebenfalls entlang der Längsmittelachse 30 liegt, gebracht werden . Eine solche Tüllenstation 1 kann als isolierte Maschine verwendet werden oder Bestandteil einer Anlage zum Konfektionieren von Kabeln sein, welche neben der Tüllenstation weiter Abisolierstationen, Crimpstationen und gegebenenfalls Gehäusebestückungsstationen aufweisen kann.

Das Kabel 12 wird mit einem (nicht dargestellten) Greifer zum Tüllenbestückungsmodul 3 herangeführt. Eine derartige Tüllenstation 1 entspricht einer vollautomatischen Ausführung. Selbstverständlich wäre es aber auch vorstellbar, anstelle eines Vollautomaten die Tüllenstation 1 mit dem nachfolgend im Detail beschriebenen neuartigen Tüllenbestückungsmodul 3 in einer halbautomatischen Variante oder in anderen Varianten auszuführen.

Der Tüllenspeicher 2 der Tüllenstation 1 weist eine Trommel 4 zur losen Bevorratung einer Vielzahl von Tüllen auf, eine in die drehende Trommel 4 ragende Förderschiene 5 zur lagerichtigen Speicherung und Weiterbeförderung der Tüllen und eine Vereinzelungseinheit 6 mit einer Ausstossvorrichtung, mittels der jeweils die erste Tülle in der Förderschiene 5 dem Tüllenbestückungsmodul 3 zugeführt wird. Betreffend Tüllenspeicher 2 entspricht die in Fig. 1 gezeigte Tüllenstation 1 im Wesentlichen den aus EP 0 626 738 A1 oder EP 0 534 106 A1 bekannt gewordenen Tüllenstationen. Einzelheiten zur Ausgestaltung des Tüllenspeichers 2 mit Trommel 4, Förderschiene 5 und Vereinzelungseinheit 6 sind aus diesen Schriften entnehmbar. Das nachfolgend im Detail beschriebene Tüllenbestückungsmodul 3 könnte aber auch mit anderen Tüllenspeichern oder Tüllenzuführvorrichtungen kombiniert werden. Es wäre sogar auch eine Tüllenstation ohne Tüllenspeicher denkbar, bei welcher einzelne Tüllen manuell dem Tüllenbestückungsmodul 3 zugeführt werden.

Konstruktive Details des Tüllenbestückungsmoduls 3 der Tüllenstation 1 sind aus Fig. 2 entnehmbar. Zur verbesserten Einsicht auf die massgeblichen Bauteile sind im Vergleich zu Fig. 1 einige Bauteile wie etwa Abdeckungen des Maschinengestells 31 entfernt worden. Das Tüllenbestückungsmodul 3 umfasst eine Transfereinheit 7 mit einem Dorn 9. Die Transfereinheit 7 ist als Schwenkeinheit ausgebildet und kann zwischen der in Fig. 2 gezeigten Übernahmestellung und einer zweiten horizontalen Stellung, in der der Dorn 9 dem Kabelende des Kabels 12 zugewandt ist, hin und her geschwenkt werden. Die entsprechende Drehachse für die Schwenkbewegung ist mit R bezeichnet. Mit der Bestückungseinheit 8 wird die Tülle 11 auf das Kabel 12 gebracht. Da die Tülle 11 vom Dorn 9 der Bestückungseinheit in der vorerwähnten zweiten Stellung übergeben wird, wird diese Stellung als Übergabestellung bezeichnet.

Die Transfereinheit 7 weist einen Dornträger 18 auf, der über einem Schwenkmechanismus mit einem motorisch betreibbaren Schwenkmechanismus mit dem Maschinengestell 31 verbunden ist. In der Übernahmestellung, in der der Dorn 9 vertikal ausgerichtet ist, kann mittels der Vereinzelungseinheit 6 eine Tülle 11 auf den Dorn 9 aufgebracht werden. Dies erfolgt mittels eines vertikal auf und ab bewegbaren Stössel einer Ausstossvorrichtung 19 der Vereinzelungseinheit 6. Der Dorn 9 weist ähnlich wie die an sich schon bekannten Dorne aus EP 0 626 738 A1 zwei Aufnahmebereiche für die Tülle auf. Ein vorderer Bereich weist einen kleineren Durchmesser auf, ein hinterer Bereich weist einen grösseren Durchmesser auf. In der Übernahmestellung wird die Tülle zunächst nur auf den vorderen Bereich mit dem kleineren Durchmesser auf den Dorn 9 mittels der Vereinzelungseinheit 9 aufgeschoben.

Der Dorn 9 ist im Dornträger 18 in axialer Richtung verschiebbar gelagert aufgenommen und kann mittels eines Aktuators in axialer Richtung von einer Ruhestellung in eine ausgefahrene Stellung verschoben werden. Der Dorn 9 ist in der vertikalen Übernahmestellung der Transfereinheit 7 in der Ruhestellung. Der Dorn 9 wird mittels einer Schraubendruckfeder 27 zum Erzeugen einer Vorspannkraft in der Ruhestellung gehalten. Der Dorn 9 ist durch den Dornträger 18 geführt und überragt den Dornträger 18 beidseitig, wobei ein den Dornträger 18 vorderseitig überragender Teil des Dorns die Spitze des Dorns umfasst und zum Handhaben der Tülle dient und wobei ein in Bezug auf den Dornträger 18 rückseitiger Bereich des Dorns einen Bolzen 35 bildet, der von einem linear verfahrbaren Schieber 32 beaufschlagbar ist. Am Ende des Bolzens 35, entlang dem die Feder 27 geführt ist, ist ein Andockelement 33 vorgesehen, das, wenn die Transfereinheit 7 in die horizontale Übergabestellung geschwenkt wird, in eine komplementäre Aufnahme 34 am Schieber 32 eingreift. Nach diesem Eingriff ist die Verschiebebewegung in die ausgefahrene Stellung des Dorns 9 möglich.

Die Bestückungseinheit 8 besteht im Wesentlichen aus einer sich entlang der Längsmittelachse 30 erstreckenden Spreizhülse 10 zum Halten der Tülle 11 in aufgeweiteten Zustand und zum Platzieren der Tülle 11 auf das Kabelende des Kabels 12 und einer Tüllenaufnahmeeinrichtung 20 zum Aufnehmen und Halten der Tülle 11 während des Bestückungsvorgangs. Die Spreizhülse 10 ist ersichtlicherweise zweiteilig ausgebildet und weist zwei Schalenteile 13, 13' auf. Die Tüllenaufnahmeeinrichtung 20 ist ebenfalls zweiteilig ausgebildet und weist zwei Backen 16, 16' auf. Die gegenläufig radial bewegbaren Backen 16, 16' und die Schalenteilen 13, 13' können paarweise zwischen einer Schliessstellung und einer Offenstellung bewegt werden. In der in Fig. 2 gezeigten Offenstellung sind die jeweiligen Backen 16, 16' und Schalenteile 13, 13' in paralleler Lage derart voneinander beabstandet, dass das dazwischenliegende fertig mit einer Tülle 11 bestückte Kabelende des Kabels 12 frei liegt und von der Tüllenstation 1 zur weiteren Bearbeitung weggeführt werden kann. Die Kabelachse des Kabels 12 entspricht dabei der durch die Bestückungseinheit 8 vorgegebenen Längsmittelachse 30. Die Spreizhülse 10 und die Tüllenaufnahmeeinrichtung 20 sind mechanisch miteinander gekoppelt. Sie sind relativ zueinander in axialer Richtung entlang der Längsmittelachse 30 verschiebbar ausgestaltet, wobei die Spreizhülse 10 in die Tüllenaufnahmeeinrichtung 20 einführbar ist, wodurch beim Einfahren der Spreizhülse 10 in die Tüllenaufnahmeeinrichtung 20 die Tülle auf die Spreizhülse 10 geschoben wird.

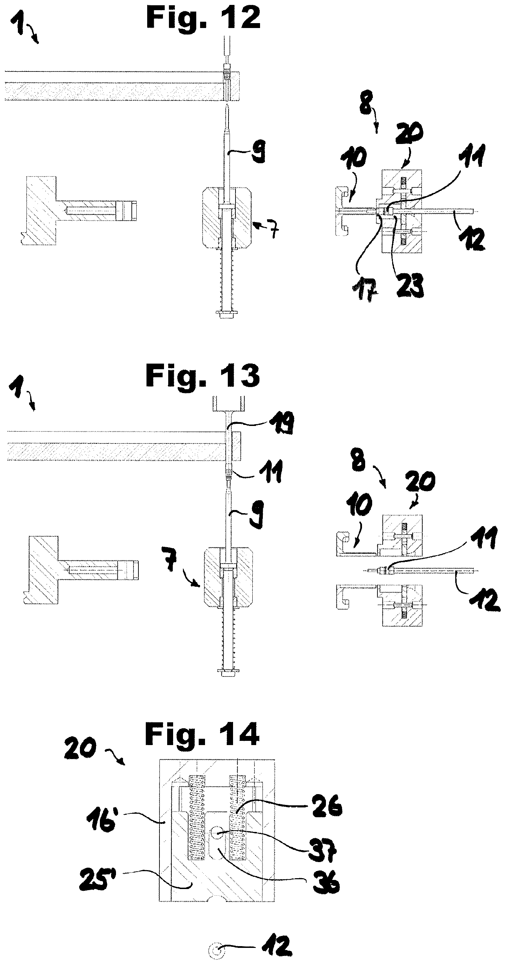

In der Tüllenaufnahmeeinrichtung 20 sind sodann Aufschiebemittel zum weiteren Aufschieben der bereits auf den Dorn 9 aufgeschobenen Tülle 11 auf einen erweiterten Abschnitt des Dorns 9 mit einem grösseren Durchmesser zum Aufweiten der Tülle integriert. Die angesprochenen Aufschiebemittel umfassen in den Backen 16, 16' senkrecht zur Längsmittelachse 20 verschiebbare Aufschiebeelemente 25, 25' (vgl. insb. nachfolgende Fig. 14).

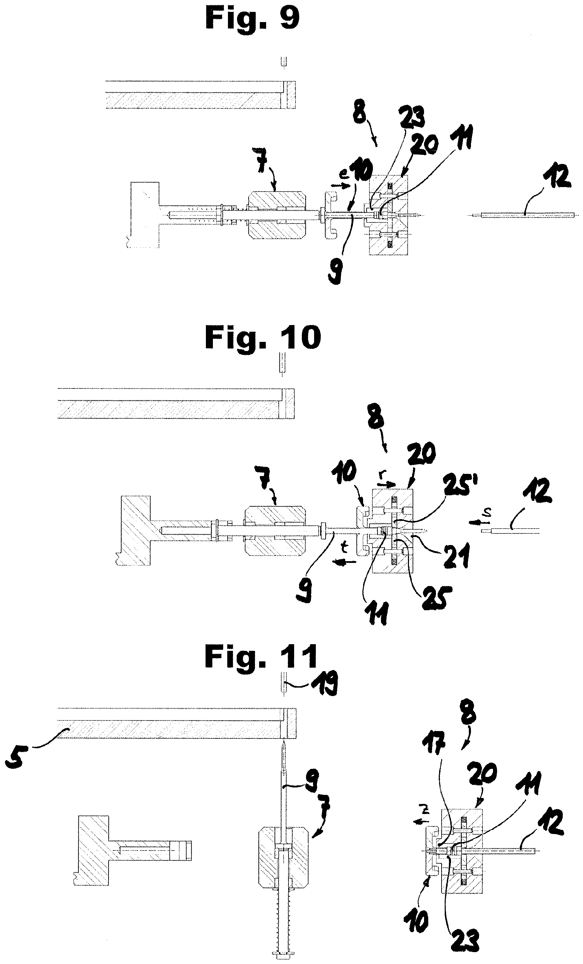

Weitere Details zur Ausgestaltung der Bestückungseinheit 8 des Tüllenbestückungsmoduls 3 der Tüllenstation 1 sind aus Fig. 4 entnehmbar. Die Bestückungseinheit 8 ist eine Baueinheit mit Tüllenaufnahmeeinrichtung 23 und nachgelagerter Spreizhülse 10. Die Bestückungseinheit 8 weist eine durch die Tüllenaufnahmeeinrichtung 20 gebildete Vorderseite auf, die dem Kabel 12 zugewandt ist. An dieser Vorderseite ist ein trichterförmiger Einführabschnitt 21 angeordnet, über den das Kabelende des Kabels in die geschlossene Tüllenaufnahmeeinrichtung 20 eingeführt werden kann (vgl. nachfolgende Fig. 11). Die nachgelagerte Spreizhülse 10 ist mit anderen Worten in Bezug auf die Längsmittelachse 30 hinter der Tüllenaufnahmeeinrichtung 20 positioniert oder angeordnet.

Die Spreizhülse 10 umfasst einen länglichen, in geschlossener Stellung zylindrischen Abschnitt mit einer Hülsenspitze 15, auf welchen die Tülle 11 aufschiebbar ist und einen an diesen Abschnitt anschliessenden Flanschabschnitt 14. Die Hülsenspitze 15 ist dabei nach vorne gerichtet, der Flanschabschnitt 14 bildet das hintere Ende der Spreizhülse 10. Der (hier nicht dargestellte) Dorn 9 weist eine Dornspitze auf, die in der Übergabestellung nach vorne bzw. zur Vorderseite hin zeigt. Der Dorn 9 und die den Dorn in der Übergabestellung temporär umgebende Spreizhülse 10 sind somit gleichgerichtet orientiert. Dank der speziellen Anordnung, Ausrichtung und Positionierung von Dorn 9 und Spreizhülse 10 wird auf vorteilhafte Weise gewährleistet, dass die Tülle 11 von der Spreizhülse 10 von hinten her erfassen kann.

In Fig. 4 ist weiterhin ein geöffneter Aufnahmekanal 22 der Tüllenaufnahmeeinrichtung 20 zur Aufnahme des Dorns 9 mit der Tülle 11 und des Kabelendes erkennbar. Der Aufnahmekanal 22 weist einen an die Tülle angepasster Tüllenaufnahmeabschnitt 23 zur Aufnahme der Tülle 11 auf. Am vorderen Ende ist der Aufnahmekanal 22 aufgeweitet und bildet einen trichterförmigen Einführabschnitt 21 auf, über den das Kabelende in die Tüllenaufnahmeeinrichtung 20, wenn die Tüllenaufnahmeeinrichtung 20 geschlossen ist (vgl. Fig. 11), einführbar ist. Am rückseitigen Ende des Tüllenaufnahmeabschnitts 23 ist ein Kragen 17 angeordnet, der zum Abstreifen der Tülle einen Anschlag für die Tülle 11 beim Herausfahren der Spreizhülse 10 aus der Tüllenaufnahmeeinrichtung 20 bildet (vgl. Fig. 12). Anhand der nachfolgenden Figuren 3 bis 13 erschliesst sich die Funktionsweise des Tüllenbestückungsmoduls 3, in der einzelne Verfahrensschritte zur Tüllenbestückung mit der neuartigen Tüllenstation 1 wiedergegeben sind.

In den Figuren 3 und 4 sind die Bestückungseinheiten bzw. -köpfe der bekannten und der erfindungsgemässen Tüllenstationen einander gegenübergestellt. Fig. 3 zeigt einen Bestückungskopf 40 aus der eingangs genannten EP 0 626 738 A1. Fig. 4 zeigt die Bestückungseinheit 8 der Tüllenstation 1 gemäss dem Ausführungsbeispiel der Fig. 1/2. Die jeweiligen Kabelüberstände sind mit a_{N} (Fig. 4) bzw. ao (Fig. 3) bezeichnet. Der Kabelüberstand a_{N} bei der neuartigen Tüllenstation 1 ist ersichtlicherweise deutlich kürzer als der Kabelüberstand ao bei der bekannten Tüllenstation. Der Kabelgreifer, mit denen das Kabel zur Tüllenstation herangeführt wird, ist in den Figuren andeutungsweise dargestellt und dort mit 28 bezeichnet.

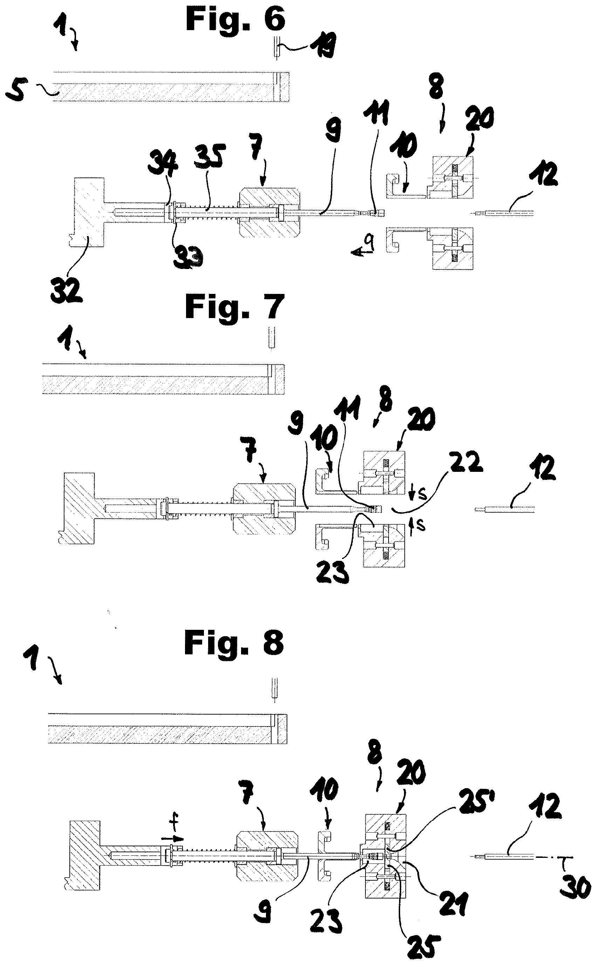

Das Verfahren zum Bestücken des Kabels 12 mit einer Tülle 11 ist wie folgt: Wenn der Dorn 9 in der vertikalen Übernahmestellung ist, kann mittels des Stössels der Ausstossvorrichtung 19 eine Tülle 11 auf den Dorn 9 aufgeschoben werden. Nach dem Aufschieben befindet sich die Tülle 11 auf dem in Fig. 5 gezeigten vorderen Bereich des Dorns 9. Anschliessend wird die Transfereinheit 7 mit dem Dorn 9 um 90° in die in Fig. 6 gezeigte Stellung geschwenkt. Nun ist der Dorn 9 in der Übergabestellung. Das Andockelement 33 am Ende des an den Dorn 9 anschliessenden Bolzens 35 kommt in Eingriff der komplementären Aufnahme 34 des Schiebers 32. Danach fährt die Bestückungseinheit 8 in offener Stellung in Richtung des Pfeils q zurück, worauf die offene Bestückungseinheit 8 über den Dorn 9 mit der darauf geschobenen Tülle 11 positioniert wird. Wie aus Fig. 7 hervorgeht, befinden sich die offenen Spreizhülsen der Bestückungseinheit 8 in einer Position hinter der Tülle 11. Die Tüllenaufnahmeeinrichtung 20 mit dem Aufnahmekanal 22 mit dem erweiterten Tüllenaufnahmeabschnitt 23 befindet sich ebenso in richtiger axialer Lage. Nun kann die Bestückungseinheit 8 geschlossen werden. Die Schliessrichtungen der jeweiligen Komponenten 13, 13'; 16, 16' der Bestückungseinheit 8 sind mit Pfeilen s angedeutet. Die Bestückungseinheit 8 befindet sich dann in der in Fig. 8 gezeigten Schliessstellung. Die geschlossene Spreizhülse 10 umgibt den Dorn 9. Die Tülle 11 ist im Tüllenaufnahmeabschnitt 23 der Tüllenaufnahmeeinrichtung 20 aufgenommen; die geschlossene Tüllenaufnahmeeinrichtung 20 umschliesst die auf den Dorn 9 aufgeschobene Tülle 11. In einem nächsten Schritt wird der Schieber entlang der Längsmittelachse 30 nach vorne verfahren, wodurch der Dorn 9 von der Ruhestellung in die ausgefahrene Stellung in Richtung des Pfeils f bewegt wird. Beim Fahren des Dorns 9 zum Kabel 12 hin fährt der Dorn in die Tüllenaufnahmeeinrichtung 20 ein, wobei beim Einfahren die Tülle 11 auf den hinteren Bereich des Dorns 9 mit dem grösseren Durchmesser geschoben wird. Das Aufschieben bewirken die Aufschiebeelemente 25, 25', die einen Anschlag für die Tülle 11 bilden, sodass beim Einfahrvorgang die Tülle 11 an den Aufschiebeelementen 25, 25'anstehen und von diesen an einer weiteren Verschiebung in Pfeilrichtung f zurückgehalten wird. Dank der federnden Lagerung der Aufschiebeplatten 25, 25' folgen die Aufschiebeplatten der Kontur des Dorns 9. Fig. 9 zeigt die Bestückungseinheit 8 mit dem Dorn 9 in der ausgefahrenen Stellung. Daraufhin wird die Spreizhülse 10 in Richtung des Pfeils e in die Tüllenaufnahmeeinrichtung 20 eingeführt. Dabei bewegt sich die Spreizhülse 10 von der bisherigen Ausgangsstellung in eine Endstellung, die in Fig. 10 gezeigt ist. Die Spreizhülse 10 bewegt sich in axialer Richtung entlang dem Dorn 9 und spreizen die Tülle 11 weiter auf. Die Tülle 11 wird dabei von der Spreizhülse 10 von hinten her erfasst. Die Tülle 11 befindet sich nun auf der Spreizhülse 10. Die Aufschiebeelemente 25, 25' dienen auch hier als Anschläge für die Tülle und halten diese in axialer Richtung zurück, so dass die Tülle 11 auf die Spreizhülse schiebbar ist. Danach wird über den trichterförmiger Einführabschnitt 21 das Kabelende des Kabels 12 in die Bestückungseinheit 8 eingebracht und das Kabelende in die Spreizhülse 10 eingeführt. Das Einführen des Kabelendes in die Bestückungseinheit 8 und in die Spreizhülse 10 erfolgt vorliegend durch Bewegen der Bestückungseinheit 8 in Richtung r zum Kabel 12 hin und durch Bewegen des Kabels 12 um eine kurze Strecke in die Gegenrichtung (Pfeil s). Während dem Einführen des Kabelendes in die Spreizhülse 10 wird gleichzeitig der Dorn 9 durch die mit dem Pfeil t angedeutete Rückschiebebewegung zurück in seine ursprüngliche Ruhestellung gebracht. Die Bewegung t des Dorns 9 könnte aber auch vor den Bewegungen r, s der Bestückungseinheit 8 und des Kabels 12 stattfinden. Anstatt sowohl die Bestückungseinheit 8 und das Kabel 12 zu bewegen, wären auch andere Bewegungen denkbar. Erforderlich sind lediglich Relativbewegungen in axialer Richtung der Bestückungseinheit 8 in Bezug auf das Kabel 12 zum Einführen Kabelendes in die Spreizhülse 10. Beispielsweise könnte das Kabel 12 stillstehen und nur die Bestückungseinheit 8 bewegt werden. Wenn der Dorn 9 in der Ruhestellung ist, kann die Transfereinheit 7 wieder zurück geschwenkt werden. Der Dorn 9 ist nun bereit zur Aufnahme einer nächsten Tülle. Diese Stellung mit dem wieder in der Übernahmestellung zurück gebrachten Dorn 9 und der Bestückungseinheit 8 mit dem darin eingeführten Kabelende ist in Fig. 11 gezeigt. Nun kann die Spreizhülse 10 in z-Richtung zurück in die Ausgangsstellung gefahren werden, wodurch die Tülle 11 auf das Kabel 12 geschoben wird. Beim Zurückfahren der Spreizhülse 10 stützt sich die Tülle 11 am Kragen 17 ab, sodass die Tülle 11 im Tüllenaufnahmeabschnitt 23 der Tüllenaufnahmeeinrichtung 20 verbleibt, während die Spreizhülse 10 aus der Tüllenaufnahmeeinrichtung 20 herausgeführt wird. Das Kabel 12 ist in der in Fig. 12 gezeigten Stellung fertig mit der Tülle 11 bestückt. Danach wird die Bestückungseinheit 8 in die Offenstellung gebracht (Fig. 13) und das mit der Tülle 11 bestückte Kabelende des Kabels 12 kann einer nächsten (nicht dargestellten) weiteren Kabelbearbeitungsstation wie etwa einer Crimpstation mittels des Greifers zugeführt werden. Die nächste Tülle zur Bestückung eines nachfolgenden Kabels ist in der in Fig. 13 gezeigten Stellung schon wieder auf dem Dorn 9 geschoben.

Fig. 14 zeigt einen Querschnitt durch eine Tüllenaufnahmeeinrichtung 20 der Bestückungseinheit 8, wobei nur die oberen Backen 16' der Tüllenaufnahmeeinrichtung 20 gezeigt sind. Die Schnittebene verläuft dabei vertikal zur Längsmittelachse 30. Im Backen 16' ist ein plattenartiges Aufschiebeelement 25' vorgesehen, das senkrecht zur Längsmittelachse 30 begrenzt verschiebbar und federnd im Backen 16'gelagert ist. Zur federnden Lagerung werden vorliegend beispielhaft zwei Federn 26 eingesetzt, die sicherstellen, dass die Aufschiebeelemente 25' radial nach innen vorstehen und der Kontur des Dorns 9 folgen, wenn dieser in die Tüllenaufnahmeeinrichtung 20 eingeschoben wird. Die begrenzte Verschiebbarkeit wird durch ein Langloch 36 im Aufschiebeelement 25' sichergestellt, in den ein Stift 37 eingreift.

Die vorliegende Tüllenstation 1 betrifft ein Ausführungsbeispiel, bei der der Transfereinheit 7 genau ein Dorn 9 zugeordnet ist. Es wäre aber auch denkbar, eine Transfereinheit mit vier Dornen vorzusehen. Für diesen Fall müsste der Fachmann das vorgängig beschriebene Tüllenbestückungsmodul 3 derart modifizieren, dass er den Schieber und den axial verschieblichen Dorn weglässt. Die Bestückungeinheit müsste eine weitere Position anfahren können, um die Tülle auf den grösseren Dorndurchmesser zu schieben.

Weiterhin wäre eine Variante mit einer Tüllenaufnahmeeinrichtung ohne integrierte Aufschiebemittel denkbar. Die Aufschiebemittel könnten ählich wie bei den bekannten Tüllenstationen in der Art der EP 0 626 738 A1 ausserhalb der Tüllenaufnahmeeinrichtung angeordnet und einer weiteren, dritten Winkellage des Dorns zugeordnet sein.

Die Bestückungseinheit 8 der vorliegenden Tüllenstation 1 wird hauptsächlich zur Bestückung zum Kabel hingeführt. Es wäre aber auch denkbar, die Bestückungseinheit insgesamt feststehend auszugestalten und die notwendigen Bewegungen des Kabels zum Zuführen durch den Kabelgreifer oder einer anderen Kabelfördereinrichtung vorzunehmen.

## Patentansprüche

1. Tüllenstation (1) mit einem Tüllenbestückungsmodul (3) zum Bestücken eines Kabelendes eines Kabels (12) mit einer Tülle (11), das Tüllenbestückungsmodul (3) umfassend:
- eine Bestückungseinheit (8) mit einer zweiteilig ausgebildeten und zwei gegenläufig radial bewegbare Schalenteile (13, 13') aufweisende Spreizhülse (10) zum Halten der Tülle (11) in aufgeweiteten Zustand und zum Platzieren der Tülle (11) auf das Kabelende und einer zweiteilig ausgebildeten und zwei Backen (16, 16') aufweisenden Tüllenaufnahmeeinrichtung (20) zum Aufnehmen und Halten der Tülle (11) während des Bestückungsvorgangs,
wobei die Backen (16, 16') der Tüllenaufnahmeeinrichtung (20) jeweils zusammen mit den jeweiligen Schalenteilen (13, 13') der Spreizhülse (10) paarweise zwischen einer Schliessstellung und einer Offenstellung bewegbar sind,
- einer Transfereinheit (7) mit wenigstens einem Dorn (9), auf den in einer Übernahmestellung eine Tülle (11) aufschiebbar ist und der in einer Übergabestellung derart mit der Bestückungseinheit (8) in Wirkverbindung steht, dass die Tülle (11) vom Dorn (9) der Bestückungseinheit (8) übergeben werden kann, wobei die Spreizhülse (10) der Bestückungseinheit (8) den Dorn (9) in der Übergabestellung temporär umgibt, wobei der Dorn (9) und die Spreizhülse (10) gleichgerichtet orientiert sind, **dadurch gekennzeichnet, dass**
in der Tüllenaufnahmeeinrichtung (20) Aufschiebemittel zum weiteren Aufschieben der bereits auf den Dorn (9) aufgeschobenen Tülle (11) auf einen Abschnitt des Dorns (9) mit einem grösseren Durchmesser zum Aufweiten der Tülle integriert sind, welche in den Backen (16, 16') in Querrichtung begrenzt verschiebbar und federnd gelagerte vorzugsweise plattenartige Aufschiebeelemente (25, 25') umfassen.

2. Tüllenstation (1) nach Anspruch 1, **dadurch gekennzeichnet, dass** die Spreizhülse (10) und die Tüllenaufnahmeeinrichtung (20) mechanisch miteinander gekoppelt sind, wobei die Spreizhülse (10) in die Tüllenaufnahmeeinrichtung (20) einführbar ist.

3. Tüllenstation (1) nach Anspruch 1 oder 2, **dadurch gekennzeichnet, dass** die Bestückungseinheit (8) eine Baueinheit mit Tüllenaufnahmeeinrichtung (20) und gegenüber der Tüllenaufnahmeeinrichtung nachgelagerten Spreizhülse (10) ist.

4. Tüllenstation (1) nach einem der Ansprüche 1 bis 3, **dadurch gekennzeichnet, dass** die Tüllenaufnahmeeinrichtung (20) einen trichterförmigen Einführabschnitt (21) aufweist, über den das Kabelende in die Tüllenaufnahmeeinrichtung (20) einführbar ist.

5. Tüllenstation (1) nach einem der Ansprüche 1 bis 4, **dadurch gekennzeichnet, dass** die Tüllenaufnahmeeinrichtung (20) einen Aufnahmekanal (22) zur Aufnahme des Dorns (9) mit der Tülle (11) und/oder des Kabelendes aufweist, wobei am rückseitigen Ende eines Tüllenaufnahmeabschnitts (23) des Aufnahmekanals (22) ein Kragen (17) angeordnet ist, der zum Abstreifen der Tülle einen Anschlag für die Tülle (11) beim Herausfahren der Spreizhülse (10) aus der Tüllenaufnahmeeinrichtung (20) bildet.

6. Tüllenstation (1) nach einem der Ansprüche 1 bis 5, **dadurch gekennzeichnet, dass** die Transfereinheit (7) einen Dornträger (18) aufweist, in dem der wenigstens eine Dorn (9) in axialer Richtung zwischen einer Ruhestellung und einer ausgefahrenen Stellung verschiebbar gelagert ist und mittels eines Aktuators von der Ruhestellung in die ausgefahrene Stellung verfahrbar ist.

7. Tüllenstation (1) nach Anspruch 6, **dadurch gekennzeichnet, dass** der wenigstens eine Dorn (9) mittels eines Federelements (27) zum Erzeugen einer Vorspannkraft in der Ruhestellung gehalten wird.

8. Tüllenstation (1) nach Anspruch 6 oder 7, **dadurch gekennzeichnet, dass** das Tüllenbestückungsmodul (3) einen mittels des Aktuators betreibbaren Schieber (32) aufweist, um den Dorn (9) in die ausgefahrene Stellung bewegen.

9. Tüllenstation (1) nach einem der Ansprüche 1 bis 8, **dadurch gekennzeichnet, dass** der Transfereinheit (7) genau ein Dorn (9) zugeordnet ist.

10. Tüllenstation nach einem der Ansprüche 1 bis 9, **dadurch gekennzeichnet, dass** die Transfereinheit (7) als Schwenkeinheit vorzugsweise mit einem Schwenkbereich zwischen Übernahmestellung und Übergabestellung von 90° ausgestaltet ist.

## Claims

1. Grommet station (1) with a grommet assembly module (3) for providing a cable end of a cable (12) with a grommet (11), the grommet assembly module (3) comprising:
- an assembly unit (8) comprising an expansion sleeve (10) that is formed in two parts, comprises two radially counter-movable shell parts (13, 13') and is intended for holding the grommet (11) in the expanded state and placing the grommet (11) on the cable end, and comprising a grommet-receiving device (20) that is formed in two parts, comprises two jaws (16, 16') and is intended for receiving and holding the grommet (11) during the assembly operation, wherein the jaws (16, 16') of the grommet-receiving device (20) are each movable in pairs together with the respective shell parts (13, 13') of the expansion sleeve (10) between a closed position and an open position,
- a transfer unit (7) having at least one mandrel (9) onto which a grommet (11) can be pushed in an acquisition position and which is in operative connection with the assembly unit (8) in a delivery position such that the mandrel (9) can provide the assembly unit (8) with the grommet (11),
wherein the expansion sleeve (10) of the assembly unit (8) temporarily encompasses the mandrel (9) in the delivery position, wherein the mandrel (9) and the expansion sleeve (10) are oriented in the same direction, **characterized in that** pushing means are integrated in the grommet-receiving device (20) for further pushing the grommet (11) that was already placed onto the mandrel (9) onto a section of the mandrel (9) with a larger diameter in order to widen the grommet, which pushing means comprise, in the jaws (16, 16'), resiliently mounted preferably plate-like pushing elements (25, 25') which can move in the transverse direction to a limited extent.

2. Grommet station (1) according to claim 1, **characterized in that** the expansion sleeve (10) and the grommet-receiving device (20) are mechanically coupled to each other, wherein the expansion sleeve (10) can be inserted into the grommet-receiving device (20).

3. Grommet station (1) according to claim 1 or 2, **characterized in that** the assembly unit (8) is a modular unit with a grommet-receiving device (20) and an expansion sleeve (10) located downstream of the grommet-receiving device.

4. Grommet station (1) according to one of claims 1 to 3, **characterized in that** the grommet-receiving device (20) comprises a funnel-shaped insertion portion (21), through which the cable end can be inserted into the grommet-receiving device (20).

5. Grommet station (1) according to one of claims 1 to 4, **characterized in that** the grommet-receiving device (20) has a receiving channel (22) for receiving the mandrel (9) with the grommet (11) and/or the cable end, wherein a collar (17) is formed at the rear end of a grommet-receiving section (23) of the receiving channel (22), which collar, in order to strip the grommet, forms a stop for the grommet (11) when the expansion sleeve (10) is reversed out of the grommet-receiving device (20).

6. Grommet station (1) according to one of claims 1 to 5, **characterized in that** the transfer unit (7) comprises a mandrel carrier (18) in which the at least one mandrel (9) is movably positioned in the axial direction between a rest position and an extended position and can be moved from the rest position into the extended position by means of an actuator.

7. Grommet station (1) according to claim 6, **characterized in that** the at least one mandrel (9) is held in the rest position by means of a spring element (27) for generating a preloading force.

8. Grommet station (1) according to claim 6 or 7, **characterized in that** the grommet assembly module (3) comprises a pusher (32) which can be operated by the actuator to move the mandrel (9) into the extended position.

9. Grommet station (1) according to one of claims 1 to 8, **characterized in that** the transfer unit (7) is associated with exactly one mandrel (9).

10. Grommet station according to one of claims 1 to 9, **characterized in that** the transfer unit (7) is configured as a pivot unit, preferably with a pivoting range of 90° between the acquisition position and the delivery position.

## Revendications

1. Station de distribution (1) comportant un module d'application de manchon (3) permettant d'appliquer un manchon (11) sur une extrémité d'un câble (12), le module d'application de manchon (3) comprenant :
- une unité d'application (8) comportant une douille à expansion (10) conçue en deux parties et présentant deux parties de coque (13, 13') pouvant être déplacées radialement dans des directions opposées, laquelle douille à expansion permet de maintenir le manchon (11) à l'état déployé et permet de placer le manchon (11) sur l'extrémité de câble, et un dispositif de réception de manchon (20) conçu en deux parties et présentant deux mâchoires (16, 16'), lequel dispositif de réception de manchon permet de recevoir et maintenir le manchon (11) pendant le processus d'application, les mâchoires (16, 16') du dispositif de réception de manchon (20) pouvant être déplacées respectivement par paires avec les parties de coque (13, 13') respectives de la douille à expansion (10) entre une position fermée et une position ouverte,
- une unité de transfert (7) comportant au moins un mandrin (9) sur lequel un manchon (11) peut être emboîté dans une position de prise en charge et qui est en liaison fonctionnelle avec l'unité d'application (8) dans une position de transfert de telle sorte que le manchon (11) peut être transféré du mandrin (9) à l'unité d'application (8),
la douille à expansion (10) de l'unité d'application (8) entourant temporairement le mandrin (9) dans la position de transfert, le mandrin (9) et la douille à expansion (10) étant orientés dans la même direction, **caractérisée en ce que**
des moyens d'emboîtement permettant d'emboîter davantage le manchon (11) déjà emboîté au mandrin (9) sur une section du mandrin (9) sont intégrés dans le dispositif de réception de manchon (20), les moyens d'emboîtement présentant un plus grand diamètre permettant d'élargir le manchon, lesquels moyens d'emboîtement peuvent être déplacés dans les mâchoires (16, 16') de manière limitée dans la direction transversale et comprennent des éléments d'emboîtement (25, 25'), de préférence en forme de plaque, montés élastiquement.

2. Station de distribution (1) selon la revendication 1, **caractérisée en ce que** la douille à expansion (10) et le dispositif de réception de manchon (20) sont accouplés mécaniquement l'un à l'autre, la douille à expansion (10) pouvant être insérée dans le dispositif de réception de manchon (20).

3. Station de distribution (1) selon la revendication 1 ou 2, **caractérisée en ce que** l'unité d'application (8) est une unité structurale comportant un dispositif de réception de manchon (20) et une douille à expansion (10) montée en aval du dispositif de réception de manchon.

4. Station de distribution (1) selon l'une des revendications 1 à 3, **caractérisée en ce que** le dispositif de réception de manchon (20) présente une section d'insertion (21) en forme d'entonnoir, par l'intermédiaire de laquelle l'extrémité de câble peut être insérée dans le dispositif de réception de manchon (20).

5. Station de distribution (1) selon l'une des revendications 1 à 4, **caractérisée en ce que** le dispositif de réception de manchon (20) présente un canal de réception (22) pour recevoir le mandrin (9) comportant le manchon (11) et/ou l'extrémité de câble, une collerette (17) étant disposée au niveau de l'extrémité arrière d'une section de réception de manchon (23) du canal de réception (22) et formant une butée pour le manchon (11), laquelle permet de démouler le manchon lorsque la douille à expansion (10) est dégagée du dispositif de réception de manchon (20).

6. Station de distribution (1) selon l'une des revendications 1 à 5, **caractérisée en ce que** l'unité de transfert (7) présente un support de mandrin (18) dans lequel l'au moins un mandrin (9) est monté de manière à pouvoir être déplacé dans la direction axiale entre une position de repos et une position étendue et peut être déplacé de la position de repos à la position étendue au moyen d'un actionneur.

7. Station de distribution (1) selon la revendication 6, **caractérisée en ce que** l'au moins un mandrin (9) est maintenu dans la position de repos au moyen d'un élément de ressort (27) permettant de générer une force de précontrainte.

8. Station de distribution (1) selon la revendication 6 ou 7, **caractérisée en ce que** le module d'application de manchon (3) présente un coulisseau (32) qui peut être entraîné au moyen de l'actionneur pour déplacer le mandrin (9) dans la position étendue.

9. Station de distribution (1) selon l'une des revendications 1 à 8, **caractérisée en ce qu'**un mandrin (9) précis est associé à l'unité de transfert (7).

10. Station de distribution selon l'une des revendications 1 à 9, **caractérisée en ce que** l'unité de transfert (7) est réalisée sous forme d'unité pivotante, comportant de préférence une plage de pivotement de 90° entre la position de prise en charge et la position de transfert.
